# EUROPEAN PATENT APPLICATION

(11) **EP 4 678 312 A1**
(43) Date of publication of application: **14.01.2026**
(21) Application number: 24766955.9
(22) Date of filing: 27.02.2024
(51) Int. Cl.: B23B 21/00, B23B 3/26, B23B 29/24

(54) **ROTATING TOOL DEVICE, AND MACHINE TOOL**

(30) Priority: 06.03.2023 JP 2023033914
(71) Applicant: Citizen Watch Co., Ltd., Nishitokyo-shi, Tokyo 188-8511 (JP); Citizen Machinery Co., Ltd., Nagano 389-0206 (JP)
(72) Inventor: AOYAGI, Atsushi, Kitasaku-gun, Nagano 389-0206 (JP)
(74) Representative: Ricker, Mathias
(86) International application number: PCT/JP2024/007028
(87) International publication number: WO 2024/185584

(57) **Abstract**

A rotary tool device includes first and second tool holding portions that rotatably hold a tool, a swivel driving force generator that generates a swivel driving force for swiveling the first and second tool holding portions, a first swivel mechanism for holding the first tool holding portion, and swiveling the first tool holding portion in a swivel direction orthogonal to an extending direction of a spindle in response to a supply of the swivel driving force, a second swivel mechanism for holding the second tool holding portion, and swiveling the second tool holding portion in the swivel direction in response to a supply of the swivel driving force; and a swivel driving force transmission member that transmits, to the second tool holding portion, the swivel driving force supplied to the first tool holding portion, wherein the first swivel mechanism further includes a swivel driving force supply portion that is supplied with the swivel driving force from the swivel driving force generator, and the swivel driving force supply portion is disposed between an end portion of the first swivel mechanism being most distant in the swivel direction from the first tool holding portion, and the first tool holding portion.

## Description

### FIELD

The present disclosure relates to a rotary tool device and a machine tool.

### BACKGROUND

A machine tool including a pair of swivel holders that swivel along a pair of swivel axis lines orthogonal to an extending direction of a spindle has been known (for example, see PTL 1). The machine tool described in PTL 1 includes a rotary tool unit holder, a thread whirling holder, a swivel motor, a tool rotating motor, and a base body.

In the machine tool described in PTL 1, the rotary tool unit holder is disposed below the base body and equipped with a plurality of rotary tool units, and the thread whirling holder is disposed below the base body and equipped with a thread whirling tool for threading. The tool rotating motor is disposed above the base body, and swivels the rotary tool unit holder and the thread whirling holder via a swivel driving transmission mechanism disposed in the base body. The swivel motor and the tool rotating motor are disposed above the base body, and rotate the rotary tool unit and the thread whirling via a tool rotating mechanism disposed in the base body. The base body houses the swivel driving transmission mechanism and the tool rotating mechanism.

The machine tool described in PTL 1 swivels the rotary tool unit holder and the thread whirling holder by a single swivel motor and also swivels the rotary tool unit and the thread whirling by a single tool rotating motor, and can thus be reduced in size.

### [CITATION LIST]

### [PATENT LITERATURE]

[PTL 1] Japanese Unexamined Patent Publication (Kokai) No. 2022-182411

### SUMMARY

### [TECHNICAL PROBLEM]

However, in the machine tool described in PTL 1, the rotary tool unit holder is disposed to be isolated from the swivel motor, and thus there is a risk that a swivel position may be shifted according to rigidity of the rotary tool unit holder and processing accuracy by a tool mounted on the rotary tool unit may decrease.

The present disclosure has been made in order to solve such a problem, and an object of the present disclosure is to provide a rotary tool device that includes a plurality of swivelable tool holding portions, and can also achieve highly accurate processing.

A rotary tool device according to the present disclosure includes a first tool holding portion and a second tool holding portion that rotatably hold a tool for processing a workpiece held by a spindle, a swivel driving force generator that generates a swivel driving force for swiveling the first tool holding portion and the second tool holding portion, a first swivel mechanism for holding the first tool holding portion, and swiveling the first tool holding portion in a swivel direction orthogonal to an extending direction of the spindle in response to a supply of the swivel driving force, a second swivel mechanism for holding the second tool holding portion, and swiveling the second tool holding portion in the swivel direction in response to a supply of the swivel driving force, and a swivel driving force transmission member that transmits, to the second tool holding portion, the swivel driving force supplied to the first tool holding portion, wherein the first swivel mechanism includes a swivel driving force supply portion that is supplied with the swivel driving force from the swivel driving force generator, and the swivel driving force supply portion is disposed between an end portion of the first swivel mechanism being most distant in the swivel direction from the first tool holding portion, and the first tool holding portion.

Furthermore, the rotary tool device according to the present disclosure further includes a fixing portion that fixes the second tool holding portion at a desired swivel angle, wherein the second swivel mechanism preferably includes a fixed portion that is fixed by the fixing portion, and the fixed portion is preferably disposed between an end portion of the second swivel mechanism being most distant in the swivel direction from the second tool holding portion, and the second tool holding portion.

Furthermore, the rotary tool device according to the present disclosure further includes a rotation driving force generator that generates a rotation driving force for rotating a tool held by the first tool holding portion and the second tool holding portion, and a rotation driving force supply mechanism including a supply gear that is supplied with the rotation driving force from the rotation driving force generator, a first supply shaft that supplies the rotation driving force to the first tool holding portion via the supply gear, and a second supply shaft that supplies the rotation driving force to the second tool holding portion via the supply gear, wherein the supply gear is preferably disposed between the first supply shaft and the second supply shaft.

Furthermore, in the rotary tool device according to the present disclosure, the swivel driving force generator is preferably disposed in such a way as to extend in a horizontal direction between the first tool holding portion and the rotation driving force generator.

Furthermore, in the rotary tool device according to the present disclosure, at least one of the first tool holding portion and the second tool holding portion is preferably removable.

Furthermore, in the rotary tool device according to the present disclosure, the first swivel mechanism preferably further includes a first engagement portion that engages with the swivel driving force transmission member, and the first engagement portion is preferably disposed between an end portion of the first swivel mechanism being most distant in the swivel direction from the first tool holding portion, and the first tool holding portion.

Furthermore, in the rotary tool device according to the present disclosure, the second swivel mechanism preferably further includes a second engagement portion that engages with the swivel driving force transmission member, and the second engagement portion is preferably disposed between an end portion of the second swivel mechanism being most distant in the swivel direction from the second tool holding portion, and the second tool holding portion.

Furthermore, in the rotary tool device according to the present disclosure, a tool held by the first tool holding portion and the second tool holding portion preferably includes a base portion having a stick shape, and a cutting portion disposed on a tip of the base portion, and an extending direction of the base portion of the tool held by the first tool holding portion is preferably different from an extending direction of the base portion of the tool held by the second tool holding portion.

Further, a machine tool according to the present disclosure includes a spindle that rotatably holds a workpiece, and a rotary tool device that rotatably holds a tool for processing a workpiece rotatably held by the spindle, wherein the rotary tool device includes a first tool holding portion and a second tool holding portion that rotatably hold a tool for processing the workpiece held by the spindle, a swivel driving force generator that generates a swivel driving force for swiveling the first tool holding portion and the second tool holding portion, a first swivel mechanism for holding the first tool holding portion, and swiveling the first tool holding portion in a swivel direction orthogonal to an extending direction of the spindle in response to a supply of the swivel driving force, a second swivel mechanism for holding the second tool holding portion, and swiveling the second tool holding portion in the swivel direction in response to a supply of the swivel driving force, and a swivel driving force transmission member that transmits, to the second tool holding portion, the swivel driving force supplied to the first tool holding portion, the first swivel mechanism further includes a swivel driving force supply portion that is supplied with the swivel driving force from the swivel driving force generator, and the swivel driving force supply portion is disposed between an end portion of the first swivel mechanism being most distant in the swivel direction from the first tool holding portion, and the first tool holding portion.

A rotary tool device according to the present disclosure includes a plurality of swivelable tool holding portions, and can also achieve highly accurate processing.

### BRIEF DESCRIPTION OF DRAWINGS

FIG. 1 is a perspective view of a machine tool according to an embodiment;
FIG. 2A is a front view of a first tool holding portion illustrated in FIG. 1, and FIG. 2B is a side view of the first tool holding portion illustrated in FIG. 1;
FIG. 3A is a plan view of the first tool holding portion illustrated in FIG. 1, and FIG. 3B is a bottom view of the first tool holding portion illustrated in FIG. 1;
FIG. 4 is a cross-sectional view taken along a B-B line illustrated in FIG. 2A;
FIG. 5 is a cross-sectional view taken along an A-A line illustrated in FIG. 1;
FIG. 6 is a flowchart illustrating one example of workpiece processing treatment by the machine tool illustrated in FIG. 1;
FIG. 7A is a diagram illustrating a workpiece movement step illustrated in FIG. 6, and FIG. 7B is a diagram illustrating a first front processing step illustrated in FIG. 6;
FIG. 8A is a diagram illustrating a second front processing step illustrated in FIG. 6, and FIG. 8B is a diagram illustrating the cutting step illustrated in FIG. 6;
FIG. 9A is a diagram illustrating a first back processing step illustrated in FIG. 6, and FIG. 9B is a diagram illustrating a second back processing step illustrated in FIG. 6; and
FIG. 10 is a cross-sectional view of a mechanism containing portion that contains a first swivel mechanism and a second swivel mechanism according to a modification example.

### DESCRIPTION OF EMBODIMENTS

A rotary tool device and a machine tool according to the present disclosure will be described below with reference to the drawings. However, it should be noted that a technical scope of the present disclosure is not limited to the embodiments and extends to the inventions described in the claims and equivalents thereof.

(Configuration and Function of Rotary Tool Device and Machine Tool According to Embodiment)

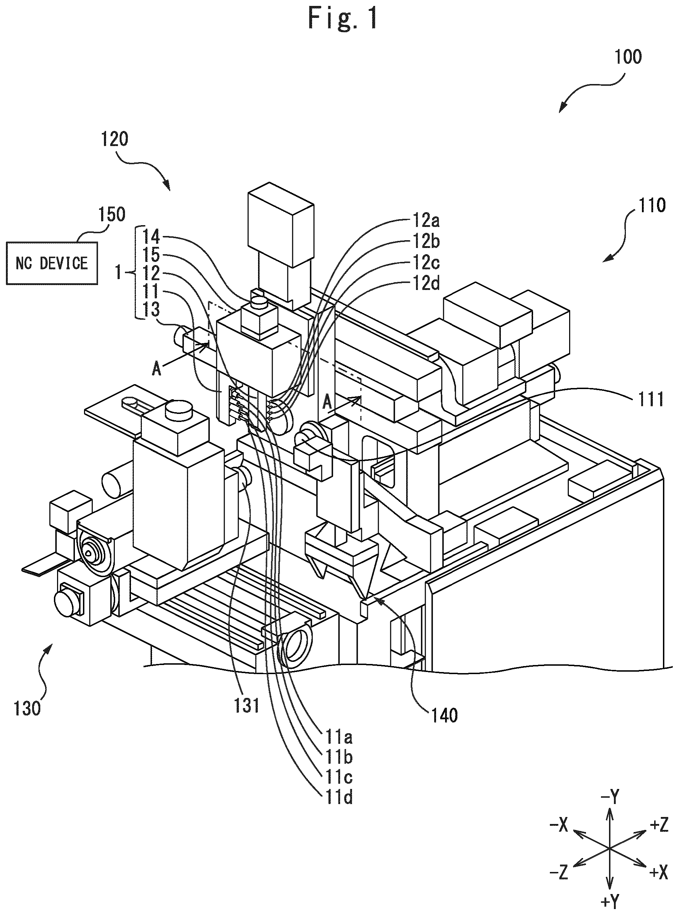

FIG. 1 is a perspective view of a machine tool according to an embodiment.

A machine tool 100 includes a front spindle portion 110 and a rear spindle portion 130 facing the right and the left, and is provided with a cutter holder 120 and a back tool holding portion 140 at the rear and the front. A movement and a motion of the front spindle portion 110, the cutter holder 120, and the rear spindle portion 130 are controlled by a numerical control (NC) device 150 being also referred to as a control unit. The NC device 150 includes a storage device that stores a workpiece processing treatment program for executing workpiece processing treatment, and an arithmetic device that executes the workpiece processing treatment program.

The front spindle portion 110 on the right side rotatably supports a front spindle 111 being also simply referred to as a spindle. The rear spindle portion 130 on the left side rotatably supports a rear spindle 131. The front spindle 111 and the rear spindle 131 integrally hold a workpiece via a chuck. The cutter holder 120 on the rear side includes a rotary tool device 1, and holds a tool for processing a workpiece held by the front spindle 111. The back tool holding portion 140 on the front side holds a tool for processing a workpiece held by the rear spindle 131. By moving the front spindle portion 110, the rear spindle portion 130, and the cutter holder 120, the machine tool 100 processes a workpiece held by the front spindle 111 by a tool held by the cutter holder 120. Further, by moving the rear spindle portion 130, the machine tool 100 processes a workpiece held by the rear spindle 131 by a tool held by the back tool holding portion 140. An axis line direction of the front spindle 111 and the rear spindle 131 with respect to the machine tool 100 is defined as a Z direction, a vertical direction orthogonal to the Z direction is defined as a Y direction, and a horizontal direction orthogonal to the Z direction and the Y direction is defined as an X direction. A configuration and a function of the front spindle portion 110, the rear spindle portion 130, the back tool holding portion 140, and the NC device 150 are conventionally publicly known, and a detailed description will be omitted.

The rotary tool device 1 includes a first tool holding portion 11, a second tool holding portion 12, a swivel driving force generator 13, a rotation driving force generator 14, and a mechanism containing portion 15. The first tool holding portion 11 and the second tool holding portion 12 are disposed to be isolated in the horizontal direction, and are supported by the mechanism containing portion 15 in such a way as to freely swivel with the Y direction as an axis center direction. The first tool holding portion 11 and the second tool holding portion 12 rotatably hold first tools 11a, 11b, 11c, and 11d and second tools 12a, 12b, 12c, and 12d that process a workpiece held by the front spindle 111. The first tool holding portion 11 swivels around a first swivel axis extending in a swivel direction orthogonal to an extending direction of the spindle, and the second tool holding portion 12 swivels around a second swivel axis extending in the swivel direction orthogonal to the extending direction of the spindle. The first swivel axis being a swivel axis of the first tool holding portion 11 and the second swivel axis being a swivel axis of the second tool holding portion 12 are different from each other. The first tool holding portion 11 holds the first tools 11a to 11d being rotary tools, and the second tool holding portion 12 holds the second tools 12a to 12d being rotary tools.

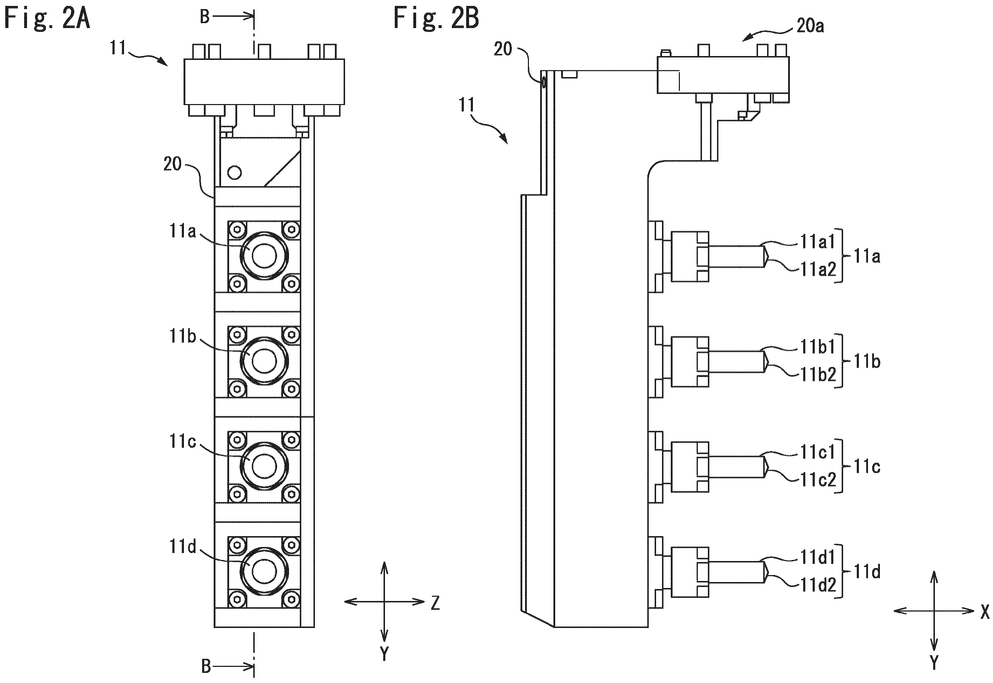

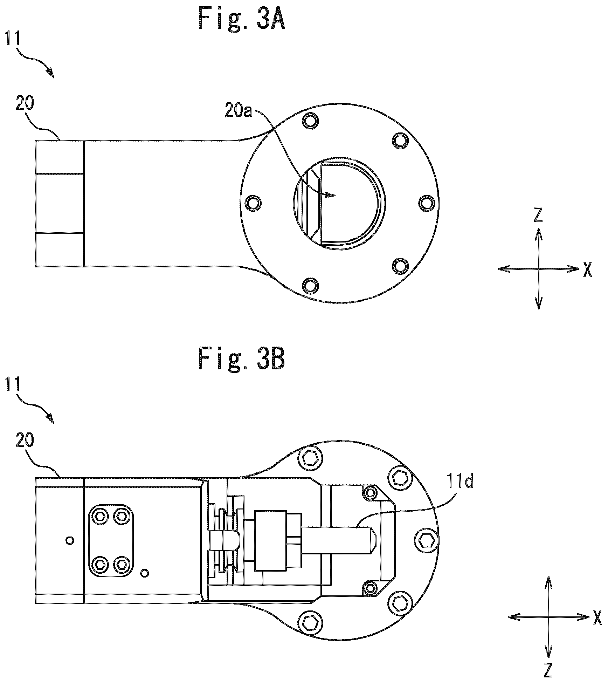

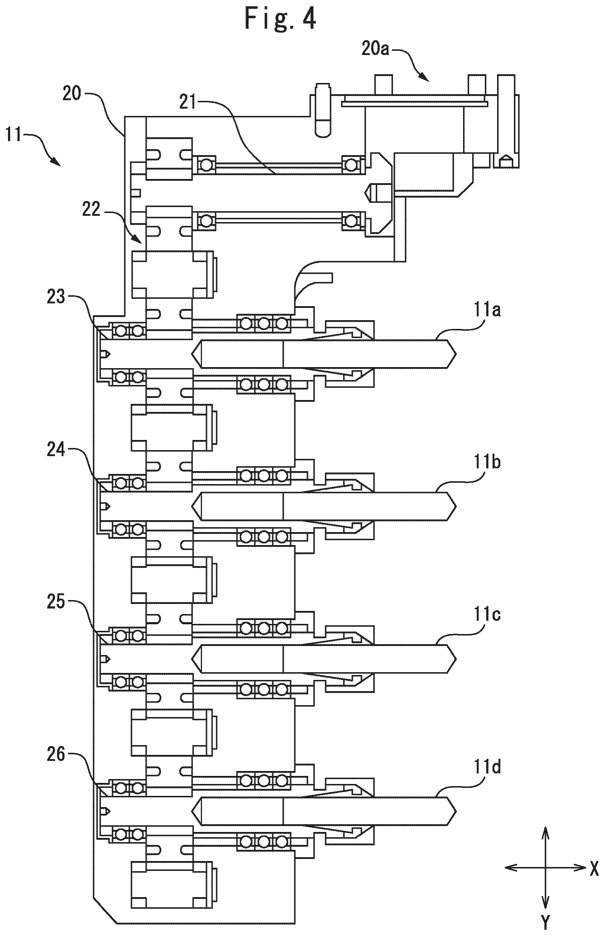

FIG. 2A is a front view of the first tool holding portion 11, FIG. 2B is a side view of the first tool holding portion 11, FIG. 3A is a plan view of the first tool holding portion 11, and FIG. 3B is a bottom view of the first tool holding portion. FIG. 4 is a cross-sectional view taken along a B-B line illustrated in FIG. 2A.

The first tool holding portion 11 includes a tool housing 20, a driving shaft 21, a driving force transmission mechanism 22, a first rotating shaft 23, a second rotating shaft 24, a third rotating shaft 25, and a fourth rotating shaft 26, and is disposed on a lower surface of the mechanism containing portion 15 in such a way as to be removable from the mechanism containing portion 15. The first tool holding portion 11 rotates the first tool 11a held by the first rotating shaft 23, the first tool 11b held by the second rotating shaft 24, the third tool 11c held by the third rotating shaft 25, and the fourth tool 11d held by the fourth rotating shaft 26.

Each of the first tools 11a to 11d is a rotary tool such as a drill and an end mill including base portions 11a1 to 11d1 having a stick shape, and cutting portions 11a2 to 11d2 disposed on tips of the base portions 11a1 to 11d1 having the stick shape.

The tool housing 20 has an insertion hole 20a formed in an upper surface, and contains the driving shaft 21 to the fourth rotating shaft 26. A supply shaft that transmits a driving force generated by the rotation driving force generator 14 is inserted into the insertion hole 20a. The driving shaft 21 is a shaft member extending in the X direction, is fitted to the supply shaft inserted via the insertion hole 20a, and rotates in accordance with rotation of the fitted supply shaft.

The driving force transmission mechanism 22 is a gear train that meshes with the driving shaft 21, the first rotating shaft 23, the second rotating shaft 24, the third rotating shaft 25, and the fourth rotating shaft 26, and rotates in accordance with rotation of the driving shaft 21 and transmits a driving force generated by the rotation to the first rotating shaft 23, the second rotating shaft 24, the third rotating shaft 25, and the fourth rotating shaft 26.

The first rotating shaft 23 meshes with one gear of the gear train constituting the driving force transmission mechanism 22, and rotates in accordance with rotation of the meshing gear. The rotation of the first rotating shaft 23 rotates the first tool 11a held by the first rotating shaft 23. The second rotating shaft 24 meshes with two gears of the gear train constituting the driving force transmission mechanism 22, and rotates in accordance with rotation of the meshing gears. The rotation of the second rotating shaft 24 rotates the first tool 11b held by the second rotating shaft 24. The third rotating shaft 25 meshes with two gears of the gear train constituting the driving force transmission mechanism 22, and rotates in accordance with rotation of the meshing gears. The rotation of the third rotating shaft 25 rotates the first tool 11c held by the third rotating shaft 25. The fourth rotating shaft 26 meshes with one gear of the gear train constituting the driving force transmission mechanism 22, and rotates in accordance with rotation of the meshing gear. The rotation of the fourth rotating shaft 26 rotates the first tool 11d held by the fourth rotating shaft 26.

Similarly to the first tool holding portion 11, the second tool holding portion 12 is disposed on the lower surface of the mechanism containing portion 15 in such a way as to be removable from the mechanism containing portion 15. A configuration and a function of the second tool holding portion 12 are the same as the configuration and the function of the first tool holding portion 11, and thus detailed description will be omitted herein. The second tool holding portion 12 holds the second tools 12a to 12d. Similarly to the first tools 11a to 11d, each of the second tools 12a to 12d is a rotary tool such as a drill and an end mill. Note that, in the first tool holding portion 11 and the second tool holding portion, installation of a tool in a direction opposite to the direction of the first tools 11a to 11d and the second tools 12a to 12d can be achieved.

The swivel driving force generator 13 includes a servo motor and a reduction gear being a roller gear cam in one example, and is disposed in such a way as to extend in an X-axis direction, i.e., the horizontal direction between the first tool holding portion 11 and the rotation driving force generator 14. The servo motor of the swivel driving force generator 13 generates a swivel driving force for swiveling the first tool holding portion 11 and the second tool holding portion 12 around the first swivel axis and the second swivel axis extending in a Y-axis direction. The swivel driving force generator 13 supplies the generated swivel driving force to the first tool holding portion 11 and the second tool holding portion 12 via the reduction gear being the roller gear cam in one example.

The rotation driving force generator 14 includes a servo motor, a reduction gear, and a rotating shaft. The rotation driving force generator 14 is disposed in such a way as to extend in the Y-axis direction, and generates a rotation driving force for rotating the first tools 11a to 11d and the second tools 12a to 12d held by the first tool holding portion 11 and the second tool holding portion 12. The servo motor of the rotation driving force generator 14 generates a rotation driving force for rotating the first tools 11a to 11d and the second tools 12a to 12d held by the first tool holding portion 11 and the second tool holding portion 12. The rotation driving force generator 14 supplies the generated rotation driving force to the first tool holding portion 11 and the second tool holding portion 12 via the reduction gear and the rotating shaft.

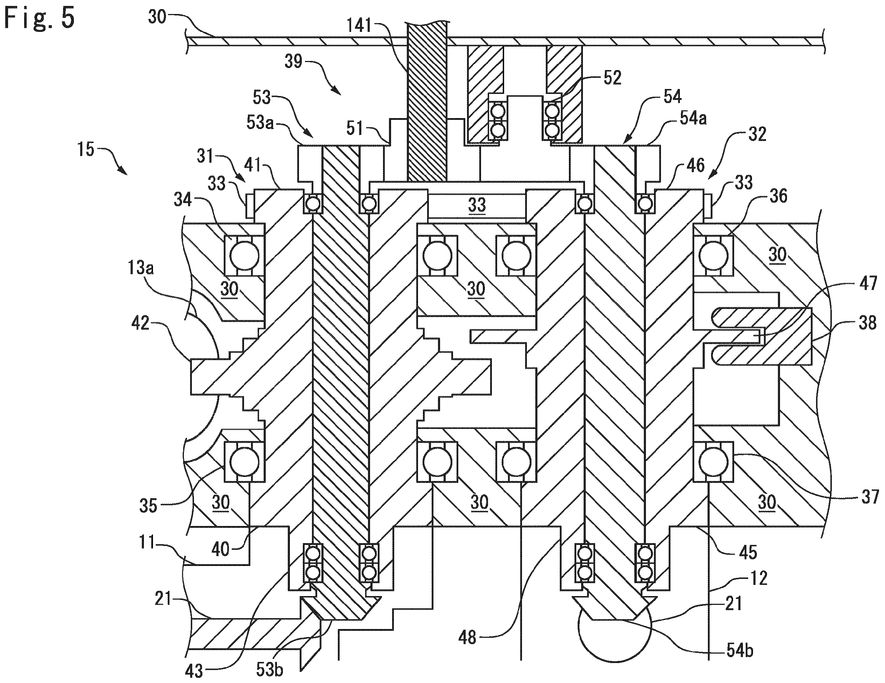

FIG. 5 is a cross-sectional view taken along an A-A line illustrated in FIG. 1.

The mechanism containing portion 15 includes a housing 30, a first swivel mechanism 31, a second swivel mechanism 32, a swivel driving force transmission member 33, a first upper bearing 34, a first lower bearing 35, a second upper bearing 36, a second lower bearing 37, a fixing portion 38, and a rotation driving force supply mechanism 39. The housing 30 contains the first swivel mechanism 31, the second swivel mechanism 32, the swivel driving force transmission member 33, the first upper bearing 34, the first lower bearing 35, the second upper bearing 36, the second lower bearing 37, the fixing portion 38, and the rotation driving force supply mechanism 39.

The first swivel mechanism 31 includes a first shaft body 40, a first engagement portion 41, a swivel driving force supply portion 42, and a first connection portion 43, and is a hollow shaft body having a through hole formed in an extending direction. The first shaft body 40 holds the first tool holding portion 11, and swivels the first tool holding portion 11 in a swivel direction being a direction orthogonal to the extending direction of the front spindle 111 in response to a supply of a swivel driving force from the swivel driving force generator 13. The first engagement portion 41 is disposed on an upper end of the first shaft body 40, and engages with the swivel driving force transmission member 33. The upper end of the first shaft body 40 on which the first engagement portion 41 is disposed is an end portion of the first swivel mechanism 31 and the first shaft body 40 that is most distant in the swivel direction from the first tool holding portion 11. The swivel driving force supply portion 42 (for example, a roller follower) is disposed in a central portion of the first shaft body 40, meshes with a roller gear cam 13a of the swivel driving force generator 13, and swivels by rotation of the roller gear cam 13a by the swivel driving force generated by the servo motor of the swivel driving force generator 13. The first connection portion 43 is disposed in a lower portion of the first shaft body 40 and connected to the first tool holding portion 11. The first tool holding portion 11 connected to the first swivel mechanism 31 by the first connection portion 43 is disposed in such a way that the extending direction of the first tools 11a to 11d is parallel to an adjacent direction being a direction in which the first swivel mechanism 31 and the second swivel mechanism 32 are adjacent.

The swivel driving force supply portion 42 is disposed between the first engagement portion 41 and the first connection portion 43 connected to the first tool holding portion 11 that holds the first tools 11a to 11d for processing a workpiece, and is thus disposed between the first engagement portion 41 and the first tools 11a to 11d. The swivel driving force supply portion 42 is disposed between the first engagement portion 41 and the first tools 11a to 11d, and thus has a distance to the first tools 11a to 11d shorter than the first engagement portion 41.

The second swivel mechanism 32 includes a second shaft body 45, a second engagement portion 46, a fixed portion 47, and a second connection portion 48, and is a hollow shaft body having a through hole formed in an extending direction similarly to the first shaft body 40. The second shaft body 45 holds the second tool holding portion 12, and swivels the second tool holding portion 12 in a swivel direction being a direction orthogonal to the extending direction of the front spindle 111 in response to a supply of the swivel driving force from the swivel driving force generator 13. The second engagement portion 46 is disposed on an upper end of the second shaft body 45, and engages with the swivel driving force transmission member 33. The upper end of the second shaft body 45 on which the second engagement portion 46 is disposed is an end portion of the second swivel mechanism 32 and the second shaft body 45 that is most distant in the swivel direction from the second tool holding portion 12. The fixed portion 47 is disposed in a central portion of the second shaft body 45, and can be sandwiched by the fixing portion 38. The fixed portion 47 is sandwiched by the fixing portion 38, and thus the second tool holding portion 12 is fixed at a desired swivel angle. The second connection portion 48 is disposed in a lower portion of the second shaft body 45 and connected to the second tool holding portion 12. The second tool holding portion 12 connected to the second swivel mechanism 32 by the second connection portion 48 is disposed in such a way that the extending direction of the second tools 12a to 12d is orthogonal to the direction in which the first swivel mechanism 31 and the second swivel mechanism 32 are adjacent.

The first tool holding portion 11 is disposed in such a way that the extending direction of the first tools 11a to 11d is parallel to the adjacent direction of the first swivel mechanism 31 and the second swivel mechanism 32. Further, the second tool holding portion 12 is disposed in such a way that the extending direction of the second tools 12a to 12d is orthogonal to the adjacent direction of the first swivel mechanism 31 and the second swivel mechanism 32. In the present embodiment indicated in an exemplified manner, the first tool holding portion 11 and the second tool holding portion 12 are disposed in such a way that the extending direction of the first tools 11a to 11d is orthogonal to the extending direction of the second tools 12a to 12d. For example, when the first tool holding portion 11 and the second tool holding portion 12 are disposed in such a way that the extending direction of the first tools 11a to 11d is orthogonal to the extending direction of the second tools 12a to 12d, a shift angle between the extending direction of the first tools 11a to 11d and the extending direction of the second tools 12a to 12d is 90°.

The fixed portion 47 is disposed between the second engagement portion 46 and the second connection portion 48 connected to the second tool holding portion 12, and is thus disposed between the second engagement portion 46, and the first rotating shaft 23 and the second rotating shaft 24 of the second tool holding portion 12 that holds the second tools 12a to 12d.

The swivel driving force transmission member 33 is formed of a member having flexibility such as a belt and a chain, and engages with the first engagement portion 41 of the first swivel mechanism 31 and the second engagement portion 46 of the second swivel mechanism 32. The swivel driving force transmission member 33 transmits, to the second swivel mechanism 32, a swivel driving force supplied to the first swivel mechanism 31 from the swivel driving force generator 13 via the roller gear cam 13a and the swivel driving force supply portion 42.

The first upper bearing 34 and the first lower bearing 35 are disposed between the housing 30 and the first swivel mechanism 31, and swivelably support the first swivel mechanism 31. The first upper bearing 34 is disposed between the first engagement portion 41 and the swivel driving force supply portion 42, and the first lower bearing 35 is disposed between the swivel driving force supply portion 42 and the first connection portion 43. The first upper bearing 34 and the first lower bearing 35 are disposed in such a way as to sandwich the swivel driving force supply portion 42, and thus the swivel driving force supply portion 42 is disposed between the first upper bearing 34 and the first lower bearing 35.

The second upper bearing 36 and the second lower bearing 37 are disposed between the housing 30 and the second swivel mechanism 32, and swivelably support the second swivel mechanism 32. The second upper bearing 36 is disposed between the second engagement portion 46 and the fixed portion 47, and the second lower bearing 37 is disposed between the fixed portion 47 and the second connection portion 48. The second upper bearing 36 and the second lower bearing 37 are disposed in such a way as to sandwich the fixed portion 47, and thus the fixed portion 47 is disposed between the second upper bearing 36 and the second lower bearing 37.

The fixing portion 38 is a brake that stops swivel of the second swivel mechanism 32 by sandwiching the fixed portion 47, and fixes the second tool holding portion 12 at a desired swivel angle. By sandwiching the fixed portion 47 by the fixing portion 38, when a workpiece is processed by the second tools 12a to 12d held by the second tool holding portion 12, a risk that a swivel angle position of the second tools 12a to 12d may be shifted and processing accuracy may decrease is reduced. Since the swivel driving force transmission member 33 is formed of a member having flexibility such as a belt and a chain, the second tool holding portion 12 is not fixed when the second tool holding portion 12 is not fixed by the fixing portion 38. Thus, there is a risk that the second tool holding portion 12 may be deviated in the swivel direction due to contact of the second tools 12a to 12d with a workpiece when the workpiece is processed by the second tools 12a to 12d. By fixing the second tool holding portion 12 by the fixing portion 38, the second tool holding portion 12 is prevented from being deviated in the swivel direction when a workpiece is processed by the second tools 12a to 12d, and a risk that a swivel angle position of the second tools 12a to 12d may be shifted and processing accuracy may decrease is reduced.

The rotation driving force supply mechanism 39 includes a first gear 51, a second gear 52, a first supply shaft 53, and a second supply shaft 54, and supplies the rotation driving force generated by the rotation driving force generator 14 to the first tool holding portion 11 and the second tool holding portion 12.

The first gear 51 is also referred to as a supply gear, and engages with a tip of the rotating shaft 141 of the rotation driving force generator 14 and is supplied with the rotation driving force generated by the rotation driving force generator 14 from the rotation driving force generator 14. The first gear 51 meshes with a first supply gear 53a formed on an upper end of the first supply shaft 53, and the second gear 52. The second gear 52 meshes with the first gear 51 and also meshes with a second supply gear 54a formed on an upper end of the second supply shaft 54, and thus supplies, to the second supply shaft 54, the rotation driving force supplied to the first gear 51.

The first supply shaft 53 includes the first supply gear 53a formed on the upper end and also includes a first supply meshing portion 53b formed on a lower end, and a portion except for the first supply gear 53a and the first supply meshing portion 53b is contained in the first swivel mechanism 31. The first supply gear 53a meshes with the first gear 51, and the first supply meshing portion 53b meshes with the driving shaft 21 of the first tool holding portion 11. The first supply shaft 53 supplies, to the driving shaft 21 of the first tool holding portion 11 via the first supply meshing portion 53b, the rotation driving force supplied from the first gear 51 via the first supply gear 53a.

The second supply shaft 54 includes the second supply gear 54a formed on the upper end and also includes a second supply meshing portion 54b formed on a lower end, and a portion except for the second supply gear 54a and the second supply meshing portion 54b is contained in the second swivel mechanism 32. The second supply gear 54a meshes with the second gear 52, and the second supply meshing portion 54b meshes with the driving shaft 21 of the second tool holding portion 12. The second supply shaft 54 supplies, to the driving shaft 21 of the second tool holding portion 12 via the second supply meshing portion 54b, the rotation driving force supplied from the second gear 52 via the second supply gear 54a.

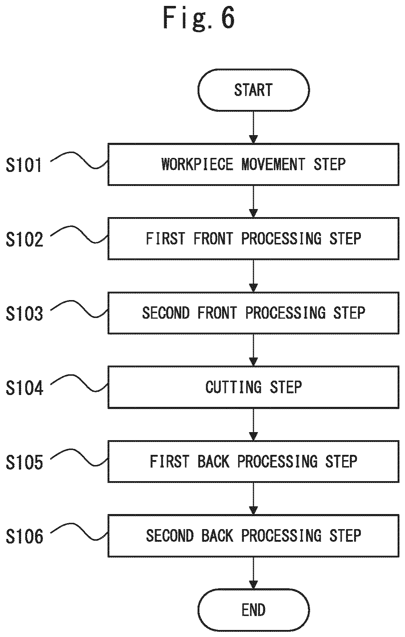

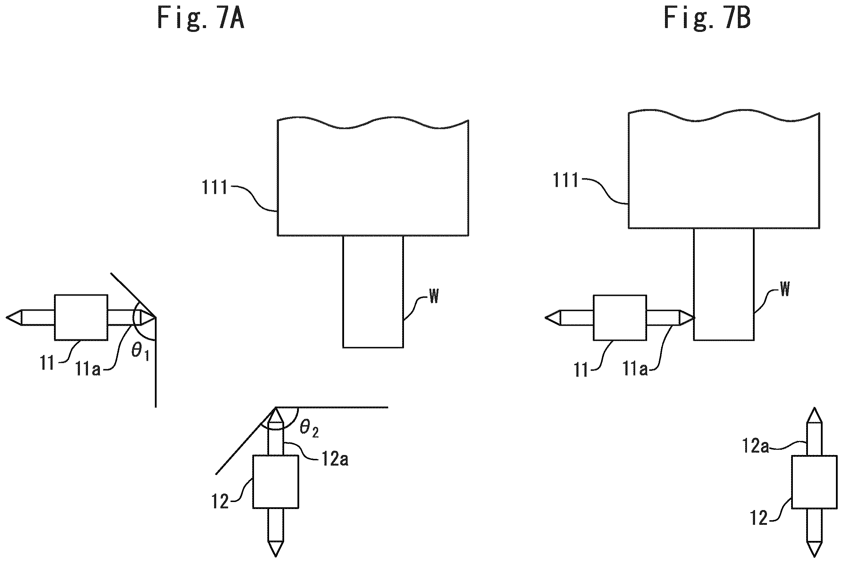

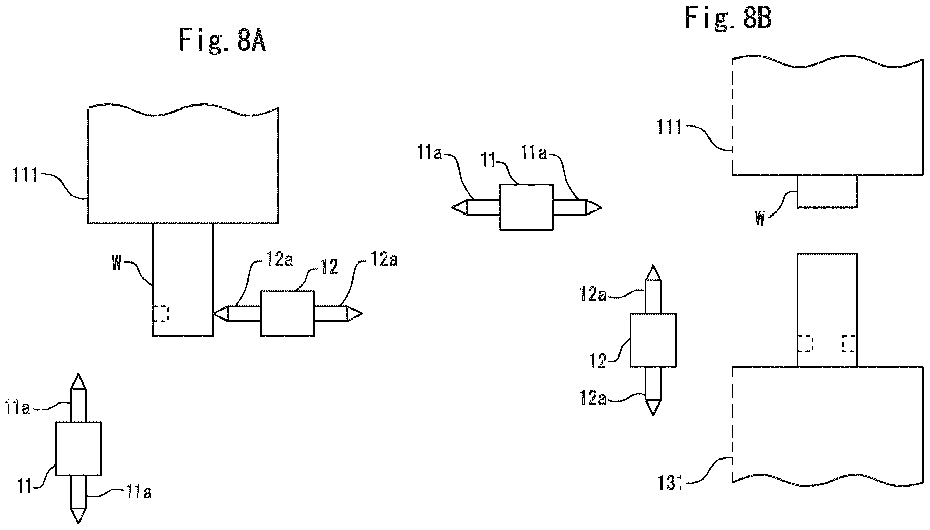

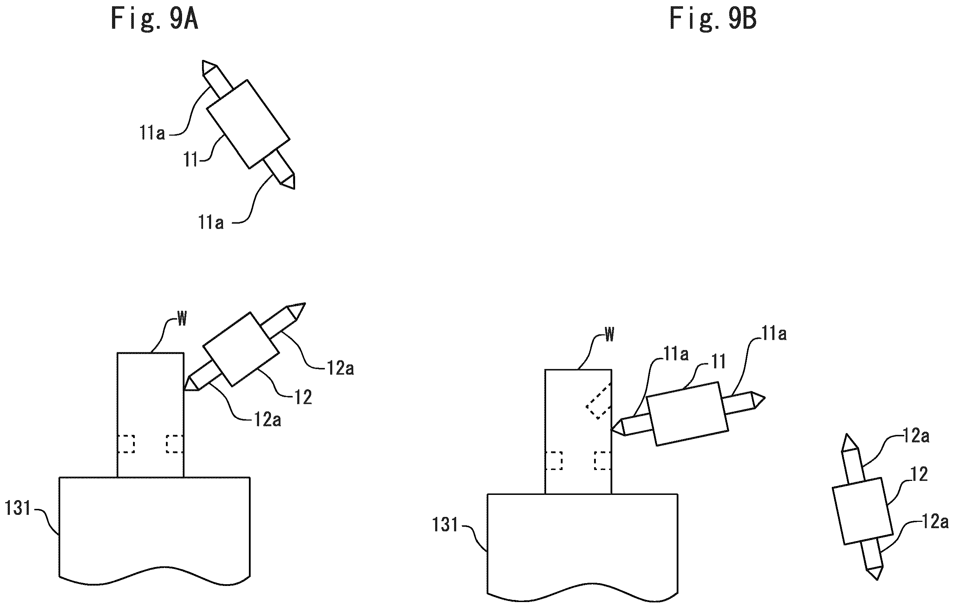

FIG. 6 is a flowchart illustrating one example of workpiece processing treatment by the machine tool 100. FIG. 7A is a diagram illustrating a workpiece movement step illustrated in FIG. 6, FIG. 7B is a diagram illustrating a first front processing step illustrated in FIG. 6, FIG. 8A is a diagram illustrating a second front processing step illustrated in FIG. 6, and FIG. 8B is a diagram illustrating a cutting step illustrated in FIG. 6. FIG. 9A is a diagram illustrating a first back processing step illustrated in FIG. 6, and FIG. 9B is a diagram illustrating a second back processing step illustrated in FIG. 6. The workpiece processing treatment illustrated in FIG. 6 is executed mainly by a processor of the NC device 150 in cooperation with each element of the machine tool 100, based on a workpiece processing program stored in advance in a storage unit of the NC device 150. Note that FIGS. 7 and 8 are described with an example in which the front processing step and the back processing step are performed, and thus the first tool, the second tool, the first tool holding portion, and the second tool holding portion are disposed at the front and the rear.

First, in the workpiece movement step as illustrated in FIG. 7A, the NC device 150 moves a workpiece W held by the front spindle 111 to a predetermined processing position (S101). The NC device 150 moves the first tool holding portion 11 and the second tool holding portion 12 to a processing position by moving the cutter holder 120 in the X-axis direction or the Y-axis direction.

Next, in the first front processing step as illustrated in FIG. 7B, the NC device 150 executes cutting processing treatment of the workpiece W by the first tool 11a held by the first tool holding portion 11 (S102). The NC device 150 moves the cutter holder 120 in the X direction and the Y direction, and also swivels the first tool holding portion 11 around the first swivel axis extending in the Y-axis direction to a desired swivel angle. Further, the NC device 150 fixes the second tool holding portion 12 at a desired swivel angle by sandwiching the fixed portion 47 by the fixing portion 38. In the machine tool 100, as one example, a swivel angle θ₁ at which the first tool holding portion 11 can swivel is 135° acquired by adding 45° from an angle orthogonal to an extending direction of the workpiece W toward an opposite direction to 90° between the angle orthogonal to the extending direction of the workpiece W and the extending direction of the workpiece W.

Next, in the second front processing step as illustrated in FIG. 8A, the NC device 150 executes cutting processing treatment of the workpiece W by the second tool 12a held by the second tool holding portion 12 (S103). The NC device 150 moves the cutter holder 120 in the X direction and the Y direction, and also swivels the second tool holding portion 12 around the second swivel axis extending in the Y-axis direction. Further, the NC device 150 fixes the second tool holding portion 12 at a desired swivel angle by sandwiching the fixed portion 47 by the fixing portion 38. In the machine tool 100, as one example, a swivel angle θ₂ at which the second tool holding portion 12 can swivel is 135° similarly to the swivel angle θ₁ at which the first tool holding portion 11 can swivel.

Next, in the cutting step as illustrated in FIG. 8B, the NC device 150 causes the rear spindle 131 to hold the workpiece W, and cuts the workpiece W by an unillustrated cutting tool (S104).

Next, in the first back processing step as illustrated in FIG. 9A, the NC device 150 executes cutting processing treatment of the workpiece W by the second tool 12a held by the second tool holding portion 12 (S105). Then, in the second back processing step as illustrated in FIG. 9B, the NC device 150 executes cutting processing treatment of the workpiece W by the first tool 11a held by the first tool holding portion 11 (S106). The first back processing step and the second back processing step are similar to the first front processing step and the second front processing step except that tools on an opposite side being held by the first tool holding portion 11 and the second tool holding portion 12 are used and the workpiece W is held by the rear spindle 131 instead of the front spindle 111. Further, an order and a direction of tools used in the first front processing step and the second front processing step and the first back processing step and the second back processing step are appropriately set according to a molded product being molded by the workpiece processing treatment.

(Advantageous Effect of Rotary Tool Device and Machine Tool According to Embodiment) In the rotary tool device 1, many rotary tools can be used by providing the first tool holding portion 11 and the second tool holding portion 12 without disposing an automatic tool changer (ATC), and thus the machine tool can be reduced in size by omitting the ATC. The machine tool can be reduced in size, and thus the number of parts (such as a driving source) is reduced, and the machine tool having reduced power consumption and being environmentally friendly can thus be achieved.

Further, in the rotary tool device 1, the first tool holding portion 11 and the second tool holding portion 12 are disposed to be isolated in the horizontal direction, and thus rigidity is higher than that in a case where the first tool holding portion 11 and the second tool holding portion 12 are disposed to be isolated in the vertical direction, and highly accurate processing can be achieved.

Further, in the rotary tool device 1, the swivel driving force supply portion 42 is disposed between the first tool holding portion 11 that holds the first tools 11a to 11d and the first engagement portion 41 that engages with the swivel driving force transmission member 33, and thus a distance between the swivel driving force supply portion 42 and the first tools 11a to 11d is short. In the rotary tool device 1, a distance between the swivel driving force supply portion 42 and the first tools 11a to 11d is short, and thus a risk that a swivel position may be shifted according to rigidity of the first shaft body 40 is low, and highly accurate processing by the first tools 11a to 11d can be achieved.

Further, in the rotary tool device 1, the swivel driving force supply portion 42 is disposed between the first upper bearing 34 and the first lower bearing 35, and thus a distance between the swivel driving force supply portion 42 and the first tools 11a to 11d is shorter than that in a case where the swivel driving force supply portion 42 is disposed above the first upper bearing 34. In the rotary tool device 1, a distance between the swivel driving force supply portion 42 and the first tools 11a to 11d is shorter than that in a case where the swivel driving force supply portion 42 is disposed above the first upper bearing 34, and thus a risk that a swivel position may be shifted according to rigidity of the first shaft body 40 is low, and highly accurate processing can be achieved.

Further, in the rotary tool device 1, the fixed portion 47 is disposed between the second tool holding portion 12 that holds the second tools 12a to 12d and the second engagement portion 46 that engages with the swivel driving force transmission member 33, and thus a distance between the fixed portion 47 and the second tools 12a to 12d is short. In the rotary tool device 1, a distance between the fixed portion 47 and the second tools 12a to 12d is short, and thus a risk that a swivel position may be shifted according to rigidity of the second shaft body 45 is low, and highly accurate processing by the second tools 12a to 12d can be achieved.

Further, in the rotary tool device 1, the fixed portion 47 is disposed between the second upper bearing 36 and the second lower bearing 37, and thus a distance between the fixed portion 47 and the second tools 12a to 12d is shorter than that in a case where the fixed portion 47 is disposed above the second upper bearing 36. In the rotary tool device 1, a distance between the fixed portion 47 and the second tools 12a to 12d is shorter than that in a case where the fixed portion 47 is disposed above the second upper bearing 36, and thus a risk that a swivel position may be shifted according to rigidity of the second shaft body 45 is low, and highly accurate processing can be achieved.

Further, in the rotary tool device 1, the swivel driving force generator 13 meshes with the swivel driving force supply portion 42 by the roller gear cam 13a, and thus backlash does not occur, and a swivel angle of the first tool holding portion 11 held by the first swivel mechanism 31 can be quickly and highly accurately set.

Further, in the rotary tool device 1, the swivel driving force generator 13 is disposed in such a way as to extend in the horizontal direction between the first tool holding portion 11 and the rotation driving force generator 14, and thus the number of members extending in a height direction of the machine tool 100 can be reduced. In the rotary tool device 1, the number of members extending in the height direction of the machine tool 100 is reduced, and thus a degree of freedom in design in the height direction can be increased.

Further, in the rotary tool device 1, the first gear 51 supplied with the rotation driving force from the rotation driving force generator 14 is disposed between the first supply shaft 53 and the second supply shaft 54, and thus the number of gears disposed between the first gear 51, and the first supply shaft 53 and the second supply shaft 54 can be suppressed. In the rotary tool device 1, by suppressing the number of gears disposed between the first gear 51, and the first supply shaft 53 and the second supply shaft 54, a loss of the rotation driving force and backlash in the rotation driving force supply mechanism 39 are suppressed.

Further, in the rotary tool device 1, a part of the first supply shaft 53 and the second supply shaft 54 is contained in the first swivel mechanism 31 and the second swivel mechanism 32, and thus the mechanism containing portion 15 that contains the first swivel mechanism 31, the second swivel mechanism 32, and the rotation driving force supply mechanism 39 can be reduced in size.

Further, in the rotary tool device 1, the first tool holding portion 11 and the second tool holding portion 12 are removable from the mechanism containing portion 15, and thus a tool holding portion that can hold various tools having different shapes can be mounted by the single rotary tool device 1.

Further, in the rotary tool device 1, a shift angle between the extending direction of the first tools 11a to 11d and the extending direction of the second tools 12a to 12d is 90°, and the swivel angles θ₁ and θ₂ of the first tool holding portion 11 and the second tool holding portion 12 are 135°. Further, the swivel angles θ₁ and θ₂ of the first tool holding portion 11 and the second tool holding portion 12 overlap each other across 45°. An angle at which processing can be achieved by the first tools 11a to 11d and the second tools 12a to 12d is 225° acquired by subtracting 45° at which the swivel angles θ₁ and θ₂ overlap each other from 270° acquired by adding the swivel angles θ₁ and θ₂ that are 135°. In the rotary tool device 1, an angle at which processing can be achieved by the first tools 11a to 11d and the second tools 12a to 12d is 180° or more, and thus various types of processing such as formation of a recessed portion in facing portions of a peripheral surface of a workpiece can be achieved.

(Modification Example of Rotary Tool Device and Machine Tool According to Embodiment) In the rotary tool device 1, both of the first tool holding portion 11 and the second tool holding portion 12 are removable from the mechanism containing portion 15, but, in the rotary tool device according to the embodiment, at least one of the first tool holding portion 11 and the second tool holding portion 12 may be removable from the mechanism containing portion 15.

Further, the rotary tool device 1 includes the first tool holding portion 11 and the second tool holding portion 12, but the rotary tool device according to the embodiment may include three or more tool holding portions. Even when the rotary tool device according to the embodiment includes three or more tool holding portions, a swivel driving force is generated by a single swivel driving force generator, and a rotation driving force is generated by a single rotation driving force generator.

Further, in the rotary tool device 1, the first tool holding portion 11 and the second tool holding portion 12 hold the extending direction of the first tools 11a to 11d and the second tools 12a to 12d that are cutting tools. However, in the rotary tool device according to the embodiment, the first tool holding portion 11 and the second tool holding portion 12 may include a rotary tool other than a cutting tool. Further, in the rotary tool device according to the embodiment, a thread whirling tool may be held instead of the first tool holding portion 11 and the second tool holding portion 12.

Further, in the rotary tool device 1, a shift angle between the extending direction of the first tools 11a to 11d and the extending direction of the second tools 12a to 12d is 90°, but, in the rotary tool device according to the embodiment, a shift angle may be an angle other than 90° such as 0° and 180°. When a shift angle is 0°, the first tool holding portion 11 and the second tool holding portion 12 are disposed in such a way that the extending direction of the first tools 11a to 11d is parallel to the extending direction of the second tools 12a to 12d. When a shift angle is 180°, the first tool holding portion 11 and the second tool holding portion 12 are disposed in such a way that the first tools 11a to 11d face the second tools 12a to 12d.

Further, in the rotary tool device 1, a total angle of the swivel angles θ₁ and θ₂ and the shift angle is 225°, but, in the rotary tool device according to the embodiment, a total angle of the swivel angles θ₁ and θ₂ and the shift angle may be an angle other than 225°.

Further, in the rotary tool device 1, the first engagement portion 41 and the second engagement portion 46 that engage with the swivel driving force transmission member 33 are disposed on the end portions of the first swivel mechanism 31 and the second swivel mechanism 32 that are most distant in the swivel direction from the first tool holding portion 11 and the second tool holding portion 12. However, in the rotary tool device according to the embodiment, an engagement portion that engages with the swivel driving force transmission member 33 may be disposed in a position other than an end portion being most distant in the swivel direction from the first tool holding portion 11 and the second tool holding portion 12.

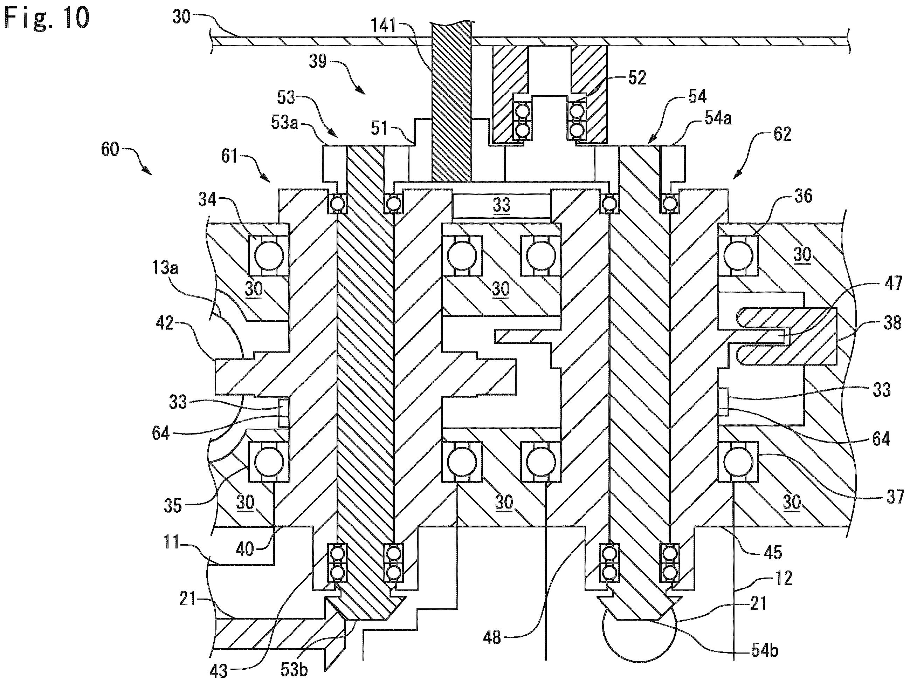

FIG. 10 is a cross-sectional view of a mechanism containing portion that contains a first swivel mechanism and a second swivel mechanism according to a modification example. The cross-sectional view illustrated in FIG. 10 corresponds to a cross-sectional view taken along the B-B line illustrated in FIG. 2A.

A mechanism containing portion 60 is different from the mechanism containing portion 15 in that the mechanism containing portion 60 includes a first swivel mechanism 61 and a second swivel mechanism 62 instead of the first swivel mechanism 31 and the second swivel mechanism 32. The first swivel mechanism 61 includes a first engagement portion 63 instead of the first engagement portion 41, and the second swivel mechanism 62 includes a second engagement portion 64 instead of the second engagement portion 42. A configuration and a function of a component contained in the mechanism containing portion 60 other than the first engagement portion 63 and the second engagement portion 64 are the same as the configuration and the function of the component contained in the mechanism containing portion 15 and provided with the same reference sign, and thus detailed description will be omitted herein.

The first engagement portion 63 is disposed between an end portion of the first swivel mechanism 61 being most distant in the swivel direction from the first tool holding portion 11, and the first tool holding portion 11, and engages with the swivel driving force transmission member 33. More specifically, the first engagement portion 63 is disposed between the first upper bearing 34 and the swivel driving force supply portion 42, and the first lower bearing 35.

The second engagement portion 64 is disposed between an end portion of the second swivel mechanism 62 being most distant in the swivel direction from the second tool holding portion 12, and the second tool holding portion 12, and engages with the swivel driving force transmission member 33. More specifically, the second engagement portion 64 is disposed between the second upper bearing 36 and the fixed portion 47, and the second lower bearing 37.

In the first swivel mechanism 61 and the second swivel mechanism 62, the first engagement portion 63 and the second engagement portion 64 are disposed closer to the first tool holding portion 11 and the second tool holding portion 12 than the first engagement portion 41 and the second engagement portion 46, rigidity is higher than that in the rotary tool device 1, and more highly accurate processing can be achieved.

The swivel driving force transmission member 33 is formed of a member having flexibility such as a belt and a chain, but, in the rotary tool device according to the embodiment, the swivel driving force transmission member may be formed of a wheel train by a member such as a gear not having flexibility.

## Claims

1. A rotary tool device comprising:
a first tool holding portion and a second tool holding portion that rotatably hold a tool for processing a workpiece held by a spindle;
a swivel driving force generator that generates a swivel driving force for swiveling the first tool holding portion and the second tool holding portion;
a first swivel mechanism for holding the first tool holding portion, and swiveling the first tool holding portion in a swivel direction orthogonal to an extending direction of the spindle in response to a supply of the swivel driving force;
a second swivel mechanism for holding the second tool holding portion, and swiveling the second tool holding portion in the swivel direction in response to a supply of the swivel driving force; and
a swivel driving force transmission member that transmits, to the second tool holding portion, the swivel driving force supplied to the first tool holding portion, wherein
the first swivel mechanism includes a swivel driving force supply portion that is supplied with the swivel driving force from the swivel driving force generator, and
the swivel driving force supply portion is disposed between an end portion of the first swivel mechanism being most distant in the swivel direction from the first tool holding portion, and the first tool holding portion.

2. The rotary tool device according to claim 1, further comprising
a fixing portion that fixes the second tool holding portion at a desired swivel angle, wherein
the second swivel mechanism includes a fixed portion that is fixed by the fixing portion, and
the fixed portion is disposed between an end portion of the second swivel mechanism being most distant in the swivel direction from the second tool holding portion, and the second tool holding portion.

3. The rotary tool device according to claim 1, wherein
the swivel driving force generator includes a roller gear cam that supplies a rotation driving force to the swivel driving force supply portion.

4. The rotary tool device according to claim 1, further comprising:
a rotation driving force generator that generates a rotation driving force for rotating a tool held by the first tool holding portion and the second tool holding portion; and
a rotation driving force supply mechanism including a supply gear that is supplied with the rotation driving force from the rotation driving force generator, a first supply shaft that supplies the rotation driving force to the first tool holding portion via the supply gear, and a second supply shaft that supplies the rotation driving force to the second tool holding portion via the supply gear, wherein
the supply gear is disposed between the first supply shaft and the second supply shaft.

5. The rotary tool device according to claim 4, wherein
the swivel driving force generator is disposed in such a way as to extend in a horizontal direction between the first tool holding portion and the rotation driving force generator.

6. The rotary tool device according to claim 1, wherein
at least one of the first tool holding portion and the second tool holding portion is removable.

7. The rotary tool device according to claim 1, wherein
the first swivel mechanism further includes a first engagement portion that engages with the swivel driving force transmission member, and
the first engagement portion is disposed between an end portion of the first swivel mechanism being most distant in the swivel direction from the first tool holding portion, and the first tool holding portion.

8. The rotary tool device according to claim 7, wherein
the second swivel mechanism further includes a second engagement portion that engages with the swivel driving force transmission member, and
the second engagement portion is disposed between an end portion of the second swivel mechanism being most distant in the swivel direction from the second tool holding portion, and the second tool holding portion.

9. The rotary tool device according to claim 1, wherein
a tool held by the first tool holding portion and the second tool holding portion includes a base portion having a stick shape, and a cutting portion disposed on a tip of the base portion, and
an extending direction of the base portion of the tool held by the first tool holding portion is different from an extending direction of the base portion of the tool held by the second tool holding portion.

10. A machine tool comprising:
a spindle that rotatably holds a workpiece; and
a rotary tool device that rotatably holds a tool for processing a workpiece rotatably held by the spindle, wherein
the rotary tool device includes
a first tool holding portion and a second tool holding portion that rotatably hold a tool for processing the workpiece held by the spindle,
a swivel driving force generator that generates a swivel driving force for swiveling the first tool holding portion and the second tool holding portion,
a first swivel mechanism for holding the first tool holding portion, and swiveling the first tool holding portion in a swivel direction orthogonal to an extending direction of the spindle in response to a supply of the swivel driving force,
a second swivel mechanism for holding the second tool holding portion, and swiveling the second tool holding portion in the swivel direction in response to a supply of the swivel driving force, and
a swivel driving force transmission member that transmits, to the second tool holding portion, the swivel driving force supplied to the first tool holding portion, wherein
the first swivel mechanism further includes a swivel driving force supply portion that is supplied with the swivel driving force from the swivel driving force generator, and
the swivel driving force supply portion is disposed between an end portion of the first swivel mechanism being most distant in the swivel direction from the first tool holding portion, and the first tool holding portion.
